# EUROPÄISCHE PATENTANMELDUNG

(11) **EP 1 645 893 A1**
(43) Veröffentlichungstag der Anmeldung: **12.04.2006**
(21) Anmeldenummer: 04024052.5
(22) Anmeldetag: 08.10.2004
(51) Int. Cl.: G02B 5/18

(54) **Beugungsgitter für elektromagnetische Strahlung sowie Verfahren zur Herstellung**

(71) Anmelder: Fraunhofer-Gesellschaft zur Förderung der angewandten Forschung e.V., 80686 München (DE)
(72) Erfinder: Schenk, Harald, Dr.-Ing., 01139 Dresden (DE)
(74) Vertreter: Pfenning, Meinig & Partner GbR

(57) **Zusammenfassung**

Die Erfindung betrifft Beugungsgitter für elektromagnetische Strahlung und ein für die Herstellung geeignetes Verfahren. Die erfindungsgemäßen Beugungsgitter können insbesondere für den Einsatz als Mikrospektrometer genutzt werden, die dabei in Form von scannenden Mikrogittern einsetzbar sind. Gemäß der gestellten Aufgabe sollen sie als effiziente Beugungsgitter in miniaturisierter Form zur Verfügung gestellt, kostengünstig und in hohen Stückzahlen hergestellt werden können. Bei den erfindungsgemäßen Beugungsgittern ist auf einer Oberfläche eines Substrates eine Oberflächenstruktur, die aus äquidistant angeordneten, parallel zueinander ausgerichteten linienförmigen Strukturelementen gebildet ist, ausgebildet. Außerdem ist die gesamte Oberfläche des Substrates und der Strukturelemente mit mindestens einer weiteren Schicht beschichtet, die eine gleichmäßige in Wellenform konturierte Oberfläche mit alternierend angeordneten Wellenbergen und Wellentälern bildet.

## Beschreibung

Die Erfindung betrifft Beugungsgitter für elektromagnetische Strahlung und ein für die Herstellung geeignetes Verfahren. Die erfindungsgemäßen Beugungsgitter können insbesondere für den Einsatz als Mikrospektrometer genutzt werden, die dabei in Form von scannenden Mikrogittern einsetzbar sind.

Solche Mikrospektrometer mit verschwenkbaren Beugungsgittern sind beispielsweise von H. Grüger u.a. in "Performance and Applications of a spectrometer with micromachined scanning grating"; Micromachining and Microfabrication, part of SPIE Photonic West (2203) beschrieben worden.

Für viele Anwendungen sind sehr kleine mikromechanische Systeme erwünscht, dementsprechend müssen auch die dabei eingesetzten Beugungsgitter entsprechend klein zur Verfügung gestellt werden. Wie bereits angedeutet, werden die Beugungsgitter dabei um eine Rotationsachse verschwenkt und so die elektromagnetische Strahlung, die von einer entsprechenden Strahlungsquelle auf ein solches Beugungsgitter gerichtet ist, in einem Spektralbereich sequentiell über einen oder mehrere für die Detektion von bestimmten Wellenlängen der elektromagnetischen Strahlung geeigneten Detektoren geführt.

Üblicherweise werden hochpräzise und effiziente Beugungsgitter durch ein Abformungsverfahren von einem so genannten Master oder auch durch holographische Verfahren hergestellt. Für die Abformung von einem Master, muss dieser vorab hergestellt werden. Die Herstellung erfolgt dabei so, dass mittels eines Ritzwerkzeuges äquidistante Linien in ein Substrat, das z.B. aus einem Metall besteht, ausgebildet werden. Die Abformung von einem solchen Master kann dann z.B. mittels eines aushärtenden Kunststoffes z.B. von Epoxydharz erfolgen. Im Anschluss an die Abformung kann eine metallische Schicht hoher Reflektivität auf eine solche abgeformte Struktur aufgebracht werden.

Dabei ist es aber problematisch, dass für die Abformung ein erheblicher mechanischer Druck erforderlich ist und auf die typischerweise nur wenige 10 µm dicken Substrate erhebliche Druckkräfte wirken. Außerdem treten Probleme bei der erforderlichen lateralen Justiergenauigkeit auf.

Außerdem ist die mögliche Stückzahl von einzelnen Beugungsgitterelementen einer solchen Masterabformung begrenzt. Dadurch erhöhen sich selbstverständlich die Fertigungskosten solcher für mikromechanische Anwendungen geeigneter Beugungsgitter.

Holographische Verfahren zur Herstellung entsprechender Beugungsgitter beruhen auf dem Interferenzprinzip mit einem Einsatz von Laserstrahlung. Durch Interferenz von Laserteilstrahlen entsteht ein in Ansätzen sinusförmiges Intensitätsprofil, mit dem die photoempfindliche Schicht auf einem Substrat mit dem entsprechenden Interferenzmuster beleuchtet wird. Dieses Interferenzintensitätsprofil wird dann nach der Belichtung und anschließende Entwicklung in topologischer Form auf die photoempfindliche Schicht übertragen. Die photoempfindliche Schicht kann nachfolgend mit einem hochreflektierenden Metallfilm überzogen werden.

Bei der Herstellung können aber die Anlagentechnik, wie sie beispielsweise in ausgereifter Form bei der Halbleiterelementeherstellung üblicherweise eingesetzt wird, nicht eingesetzt werden, so dass eine zusätzliche Implementierung in solche Anlagentechnik erforderlich ist.

Außerdem ist es bekannt Beugungsgitter mit entsprechender Oberflächentopologie durch die an sich bekannten Verfahrenstechniken der Graustufenlithographie herzustellen. Dabei ist jedoch die Anzahl/Abstand der einzelnen Linien eines Beugungsgitters begrenzt, so dass die spektrale Auflösung eines solchen Beugungsgitters ebenfalls limitiert ist.

Beugungsgitter können aber auch durch eine einfache Strukturierung einer auf einem Substrat aufgebrachten reflektierenden Schicht zur Verfügung gestellt werden. Dabei kann in erster Näherung ein rechteckförmiges Beugungsgitter erhalten werden. Die so hergestellten Beugungsgitter weisen aber eine geringe Effektivität auf und können dementsprechend nur zur spektralen Analyse mit intentsitätsstarken Quellen für elektromagnetische Strahlung eingesetzt werden.

Es ist daher Aufgabe der Erfindung effiziente Beugungsgitter in miniaturisierter Form zur Verfügung zu stellen, die kostengünstig und in hohen Stückzahlen herstellbar sind.

Erfindungsgemäß wird diese Aufgabe mit einem Beugungsgitter, das die Merkmale des Anspruchs 1 aufweist, gelöst. Sie können mit einem Verfahren gemäß Anspruch 11 hergestellt werden.

Vorteilhafte Ausgestaltungsformen und Weiterbildungen der Erfindung können mit den in den untergeordneten Ansprüchen bezeichneten Merkmalen erreicht werden.

Die erfindungsgemäßen Beugungsgitter für elektromagnetische Strahlung sind dabei so ausgebildet, dass auf einer Oberfläche eines Substrates eine Oberflächenstruktur ausgebildet worden ist.

Diese Oberflächenstruktur besteht aus äquidistant zueinander angeordneten linienförmigen Strukturelementen, die außerdem parallel zueinander ausgerichtet sein sollen. Dementsprechend bilden die linienförmigen Strukturelemente Erhebungen auf der jeweiligen Oberfläche des Substrates.

Auf der gesamten Oberfläche des Substrates, also auch auf den Oberflächen der Strukturelemente wird dann mindestens eine Schicht ausgebildet, die eine gleichmäßige in Wellenform konturierte Oberfläche mit alternierend angeordneten Wellenbergen und Wellentälern bildet, wobei dann die Wellenberge oberhalb der Strukturelemente und die Wellentäler zwischen den Strukturelementen angeordnet sind. Eine solche wellenförmige Oberflächenkontur bildet sich bei der Ausbildung der mindestens einen Schicht unabhängig von der Oberflächenkontur der einzelnen Strukturelemente aus, da bei den die Herstellung erfindungsgemäßer Beugungsgitter einsetzbaren Beschichtungstechniken ein Verrundungseffekt ausgenutzt werden kann.

So ist es in begrenztem Maß unerheblich in welcher Querschnittsgeometrie die Strukturelemente auf der jeweiligen Oberfläche eines Substrates ausgebildet sind. So können Strukturelemente rechteckige oder auch trapezförmige Querschnittsformen mit entsprechenden Kantenbereichen aufweisen und trotzdem eine nahezu kontinuierliche wellenförmige Oberflächenkontur ausgebildet werden.

Auch zumindest teilweise ellipsenförmige Querschnittsformen von Strukturelementen, die beispielsweise durch Unterätzung, worauf später nachfolgend noch zurückzukommen sein wird, ausgebildet werden können, sind bei der Ausbildung der wellenförmigen Oberflächenkontur ohne weiteres beherrschbar.

Vorteilhaft sollte(n) die zumindest eine oder mehrere übereinander ausgebildete Einzelschicht(en) eine sinusförmige Oberfläche bilden.

Insbesondere beim Einsatz von erfindungsgemäßen Beugungsgittern für Einsatz in einem vorgegebenen Spektralbereich von elektromagnetischer Strahlung sollte die Oberfläche des Substrates, auf der die Strukturelemente angeordnet sind, eben und planar ausgebildet sein.
Es besteht außerdem die Möglichkeit die erfindungsgemäßen Beugungsgitter als Transmissions- oder auch als Reflexionsgitter zur Verfügung zu stellen.

Bei einem Transmissionsgitter sollte auf einem für den jeweiligen elektromagnetischen Strahlungsbereich transparenten Substrat dann mindestens eine Schicht aus dem jeweiligen Substratwerkstoff aufgebracht werden und mit dieser mindestens einen Schicht die wellenförmige Oberflächenkontur ausgebildet sein.

Im Falle von Reflexionsgittern kann eine solche Schicht aus einem Werkstoff, der die jeweilige elektromagnetische Strahlung reflektiert, gebildet sein, wobei auch die Möglichkeit besteht mehrere solcher reflektierender Schichten übereinander auszubilden. So können beispielsweise für solche Schichten hochreflektierende Metalle oder Metalllegierungen eingesetzt werden. Beispielhaft sollen hier Aluminium, Silber, Gold oder eine entsprechende Legierung davon genannt werden.

Für den Fall, dass mehrere Schichten auf der gesamten Oberfläche eines erfindungsgemäßen Beugungsgitters ausgebildet werden sollen, müssen diese nicht zwingend aus entsprechend reflektierenden Werkstoffen ausgebildet werden. So besteht die Möglichkeit entsprechende reflektierende Multischichtsysteme aus alternierend angeordneten Schichten jeweils eines Stoffes mit höheren und eines Stoffes mit niedrigerem optischen Brechungsindex auszubilden. Ein solches Multischichtsystem ist dann ebenfalls in der Lage ein Reflexionsgitter zu bilden.

Hierbei kann aber auch Interferenz ausgenutzt werden, und die jeweiligen Schichtdicken solcher Schichten von Multischichtsystemen für vorgebbare Wellenlängen jeweils als so genannte λ/4-Schichten ausgebildet werden, wobei die jeweiligen Schichtdicken dann einem ganzzahligen Vielfachen von λ/4 einer entsprechend vorgegebenen Wellenlänge aufnehmen sollen. Dabei ist selbstverständlich der jeweilige Einfallswinkel der entsprechenden elektromagnetischen Strahlung auf die bestrahlte Oberfläche des Beugungsgitters ein zu berücksichtigender Parameter.

Die erfindungsgemäßen Beugungsgitter können so hergestellt werden, dass auf einer Oberfläche eines Substrates eine Schicht ausgebildet wird, aus der durch nachfolgende Prozessschritte die bereits erklärten linienförmige Strukturelemente gebildet werden. Eine solche Schicht kann beispielsweise ein Photoresist sein und der Photoresist durch einen photolithographischen Prozess mit nachfolgendem Ätzen Strukturelemente auf der Oberfläche des Substrates in der gewünschten Oberflächentopologie gebildet werden können. Dabei kann auf herkömmliche Anlagentechnik, wie sie beispielsweise in der Halbleiterindustrie üblicherweise eingesetzt wird, zurückgegriffen werden. Das Ätzen kann sowohl nasschemisch, wie auch in Form von ebenfalls an sich bekannten Trockenätzverfahren durchgeführt werden.

So kann eine Strukturierung mit linienförmigen Strukturelementen mit heutiger Technik von mehr als 5000 auf 1 mm erhalten werden.

Ein so vorbehandeltes Substrat kann dann, wie bereits in allgemeiner Form angesprochen, mit mindestens einer Schicht beschichtet werden, die dann die wellenförmige Oberflächenkontur bildet. Für die Ausbildung der Schicht können an sich bekannte PVD- oder CVD-Verfahren eingesetzt werden.

So besteht ohne weiteres die Möglichkeit, ein entsprechend großformatiges Beugungsgitter oder eine Vielzahl kleinformatiger Beugungsgitter auf einem Substrat in jeweils einem technologischen Schritt gleichzeitig zu bearbeiten, wodurch die Einzelstückkosten gegenüber herkömmlichen Lösungen deutlich reduziert werden können.

Mit dem erfindungsgemäßen Beugungsgitter können ohne weiteres die Parameter herkömmlicher sinusförmiger Beugungsgitter und eine entsprechende spektrale Auflösung erreicht werden.

Nachfolgend soll die Erfindung beispielhaft näher erläutert werden.

Dabei zeigt:

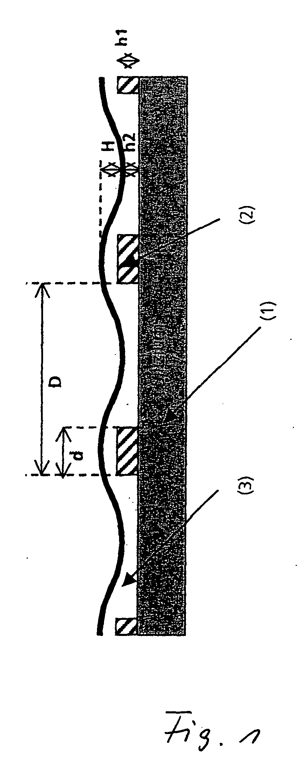

- Figur 1: in schematischer Darstellung einen Teil eines Beispiels für ein erfindungsgemäßes Beugungsgitter, als Reflexionsgitter.

Auf einem dünnen Substrat 1 aus Silizium wurde photolithographisch und nach einem Ätzen Strukturelemente 2 auf der Oberfläche des Substrates 1 ausgebildet. Die linienförmigen und parallel zueinander ausgerichteten Strukturelemente 2 weisen bei diesem Beispiel einen rechteckförmigen Querschnitt auf und eine Höhe h1 sowie eine Strukturelement Breite d auf. Die Abstände D und Querschnittsdimensionierungen der Strukturelemente 2 sind jeweils möglichst gleich gehalten.

Nachfolgend wurde durch beispielsweise Magnetronsputtern eine hochreflektierende Schicht 3 aus Aluminium auf der gesamten Oberfläche des Substrates 1, also auch oberhalb der Strukturelemente 2 ausgebildet. Die abgeschiedene Schicht 3 bildet die in Figur 1 dargestellte Oberflächenkontur in Wellenform, so dass zwischen den Strukturelementen 2 in Tälern eine Schichtdicke h2 in der Mitte zwischen zwei benachbarten Strukturelementen 2 und oberhalb von Strukturelementen 2 eine Höhe H aufwiesen. Nach Ausbildung der Schicht 3 wurde eine sinusförmige Oberflächenkontur erreicht.

## Patentansprüche

1. Beugungsgitter für elektromagnetische Strahlung,
bei dem auf einer Oberfläche eines Substrates (1) eine Oberflächenstruktur, die aus äquidistant angeordneten, parallel zueinander ausgerichteten linienförmigen Strukturelementen (2) gebildet ist, ausgebildet ist, und
die gesamte Oberfläche des Substrates (1) und der Strukturelemente (2) mit mindestens einer weiteren Schicht (3) beschichtet ist, wobei
die Schicht(en)(3) eine gleichmäßige in Wellenform konturierte Oberfläche mit alternierend angeordneten Wellenbergen und Wellentälern bildet.

2. Beugungsgitter nach Anspruch 1,
**dadurch gekennzeichnet, dass** die Schicht(en) (3) eine sinusförmige Oberfläche bildet/bilden.

3. Beugungsgitter nach Anspruch 1 oder 2,
**dadurch gekennzeichnet, dass** die Oberfläche des Substrates (1), auf der die Strukturelemente (2) ausbildet sind, als ebene planare Fläche ausgebildet ist.

4. Beugungsgitter nach einem der vorhergehenden Ansprüche, **dadurch gekennzeichnet, dass** auf einem für elektromagnetische Strahlung transparentem Substrat (1) mindestens eine Schicht(3) aus dem Substratwerkstoff ausgebildet ist.

5. Beugungsgitter nach einem der vorhergehenden Ansprüche, **dadurch gekennzeichnet, dass** die Schicht(en) (3) elektromagnetische Strahlung reflektiert.

6. Beugungsgitter nach Anspruch 5,
**dadurch gekennzeichnet, dass** die mindestens eine Schicht (3) aus einem hochreflektierenden Metall oder einer Metalllegierung gebildet ist.

7. Beugungsgitter nach Anspruch 6,
**dadurch gekennzeichnet, dass** die Schicht (3) aus Aluminium, Silber, Gold oder einer Legierung davon gebildet ist.

8. Beugungsgitter nach einem der Ansprüche 1 bis 3,
**dadurch gekennzeichnet, dass** mehrere Schichten (3) ein aus alternierend angeordneten Schichten eines Stoffes mit höherem oder niedrigerem optischen Brechungsindex gebildetes Multischichtsystem bilden.

9. Beugungsgitter nach einem der vorhergehenden Ansprüche, **dadurch gekennzeichnet, dass** die mindestens eine Schicht oder die einzelnen Schichten (3) eine Schichtdicke aufweisen, die einem ganzzahligen Vielfachen λ/4 einer vorgegebenen Wellenlänge λ entsprechen.

10. Beugungsgitter nach einem der vorhergehenden Elemente, **dadurch gekennzeichnet, dass** die Strukturelemente (2) einen rechteck-, trapezförmigen oder zumindest teilweise in Form einer Ellipse ausgebildeten Querschnitt aufweisen.

11. Verfahren zur Herstellung eines Beugungsgitters nach einem der Ansprüche 1 bis 10, **dadurch gekennzeichnet, dass** auf die Oberfläche eines Substrates (1) eine Schicht aufgebracht wird,
die Schicht mittels Photolithographie und nachfolgendem Ätzen so strukturiert wird, dass auf der Oberfläche des Substrates (1) äquidistant angeordnete linienförmige Strukturelemente (2) angeordnet sind und
im Anschluss daran die gesamte Oberfläche von Substrat (1) mit Strukturelementen (2) mit mindestens einer weiteren Schicht (3) beschichtet und eine gleichmäßige in Wellenform konturierte Oberfläche erhalten wird.
